# FASCICULE DE BREVET EUROPEEN

(11) **EP 0 423 025 B1**
(45) Date de publication et mention de la délivrance du brevet: **21.07.1993**
(21) Numéro de dépôt: 90402819.8
(22) Date de dépôt: 10.10.1990
(51) Int. Cl.: F01D 11/08, F01D 25/12, F01D 25/14

(54) **Ajustement de jeu radial excentrique pour turbomachine**
Regelung für exzentrische Radialspalten bei Turbomaschinen
Adjustment of eccentric radial clearances in turbomachines

(30) Priorité: 11.10.1989 FR 8913256
(43) Date de publication de la demande: 17.04.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Lotan, Dan, F-75013 Paris (FR)
(74) Mandataire: Moinat, François

(56) Documents cités:
- DD-C- 98 728
- DE-C- 518 932
- FR-A- 2 587 411
- GB-A- 2 114 661
- GB-A- 2 117 842
- GB-A- 2 195 715
- US-A- 4 302 932

## Description

L'invention concerne un stator de turbomachine associé à des dispositions permettant d'obtenir en fonctionnement un ajustement du jeu radial entre ledit stator et le rotor correspondant de la turbomachine.

La recherche de l'amélioration des performances des turbomachines a conduit les motoristes à rechercher une optimisation des jeux radiaux entre rotor et stator de turbomachine. En effet, le maintien, dans toutes les conditions de fonctionnement, d'un jeu minimal mais suffisant entre rotor et stator a des répercussions directes sur le rendement de la turbomachine et pour l'obtention d'une poussée maximale ainsi que sur les conditions d'apparition de phénomènes de pompage.

Pour obtenir l'ajustement du jeu, diverses solutions ont été essayées. Entre autres, plusieurs d'entre elles ont en commun la mise en place et l'utilisation de systèmes de ventilation qui, selon les phases de fonctionnement de la turbomachine, envoient des courants d'air, soit de refroidissement, soit de réchauffage sur diverses parties fixes ou tournantes constituant le stator et le rotor associés, telles que, les aubes, les disques, les carters, les anneaux de stator de turbine par exemple. Suivant le résultat recherché, des prélèvements d'air sont effectués à divers étages du compresseur ou dans l'enceinte de chambre de combustion, par exemple. Les circuits d'acheminement de l'air sont généralement équipés de vannes de réglage dont la commande permet d'obtenir une modulation des débits et éventuellement des réglages de température au moyen de mélanges réalisés à partir de sources différentes, par exemple.

De nombreux exemples témoignent de ces recherches. On peut ainsi citer FR-A- 2 496 753, FR-A- 2 464 371, FR-A- 2 431 609, FR-A- 2 360 750, FR-A- 2 360 749 dans lesquels la commande d'organes de réglage de débit d'air tels que distributeurs ou vannes est asservie à un paramètre de fonctionnement de la turbomachine à partir de la mesure par capteur d'une grandeur telle qu'une température, une vitesse de rotation ou directement une mesure du jeu à un instant donné. Dans certains cas, une régulation hydromécanique commande l'ouverture des vannes de réglage du débit d'air à partir de lois d'ouverture préétablies et programmées à l'avance. L'efficacité de ces solutions connues se trouve toutefois limitée lorsqu'apparaissent des défauts de concentricité entre rotor et stator et une répartition irrégulière du jeu radial périphérique.

Par ailleurs, des solutions ont également été proposées pour la vérification du centrage correct entre rotor et stator et éventuellement apporter des corrections aux défauts observés. De telles solutions par ajustage mécanique sont par exemple décrites par FR-A- 2 434 269 ou EP-A- 0 079 272.

Un arrangement pour tenir le stator et le rotor centrées, par distribution forcée d'air afin d'équilibrer les températures internes, après fin de service du moteur, est divulgé dans GB-A-2 117 842.

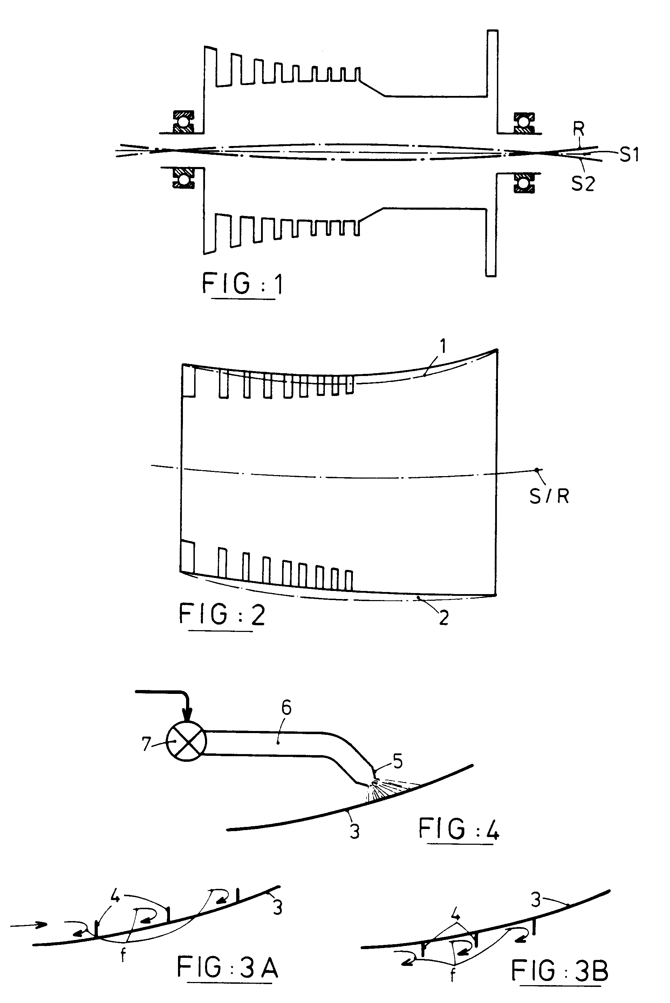

Ces dispositions antérieures connues se révèlent toutefois insuffisantes et mal adaptées pour résoudre certains problèmes d'excentrement apparaissant en fonctionnement entre rotor et stator de turbomachine et qui sont à l'origine de pertes de rendement dues à l'apparition de jeux excessifs entre rotor et stator et particulièrement de jeux de répartition périphérique inégale qui sont cause de perturbations dans les écoulements aérodynamiques de la veine des gaz de la turbomachine. Il peut également en résulter que dans certaines phases de fonctionnement de la turbomachine, notamment dans des conditions transitoires, parties tournantes et parties fixes entrent en contact sur certaines zones périphériquement limitées, provoquant une usure des abradables et des aubages et la création de jeux ultérieurs excessifs. L'origine de ces phénomènes a été située dans la déformation en fonctionnement des rotors et des stators des turbomachines. Le long d'une ligne d'arbres, on constate notamment dans certaines applications particulières, comme schématisé sur la figure 1 jointe en annexe, un déplacement des rotors dû à l'affaissement des paliers et à la flexion propre des rotors d'où résulte un affaissement vers le bas symbolisée par l'axe R de la figure 1, tandis que l'axe géométrique S1 de ligne des centres du stator ne subit pas de déformation ou subit une déformation différente, ce qui entraîne les distorsions dont les effets ont été notés ci-dessus. Dans les applications aéronautiques particulièrement visées par la présente invention, on a pu observer aussi, lors d'un arrêt de la machine par exemple, un refroidissement plus rapide de la partie inférieure des carters et donc du stator de la machine d'où il résulte une flexion en sens inverse de celle du rotor et qui est symbolisée par l'axe S2 de la figure 1.

Un des buts de l'invention est d'obtenir dans toutes les conditions de fonctionnement de la turbomachine et notamment dans les conditions transitoires un axe géométrique longitudinal de ligne des centres du stator de turbomachine confondu avec l'axe du rotor de manière à obtenir pour chaque étage sur toute la périphérie un jeu radial égal entre rotor et stator, dans le plan transversal. Ces résultats sont obtenus en associant le stator et parties fixes de la turbomachine à des moyens de modification de leur forme agissant grâce à une répartition périphériquement non uniforme des températures desdites parties fixes.

Un stator de turbomachine répondant avantageusement aux problèmes ainsi posés est caractérisé en ce que lorsque l'axe de symétrie du rotor selon la direction longitudinale de la turbomachine correspondant à son axe de rotation subit une déformation, ledit stator est associé à des moyens de déformation agissant grâce à une répartition périphériquement non uniforme des températures d'au moins une partie du stator de manière à faire coïncider les axes respectifs longitudinaux du rotor et du stator.

Divers moyens avantageux peuvent être utilisés, notamment pour obtenir un accroissement localisé du refroidissement sur la partie de carter dudit stator située du côté de la concavité formée par l'axe du rotor, notamment, soit des éléments en saillie sur la surface externe ou interne du carter formant des obstacles dans le flux de refroidissement, soit des distributeurs de gaz de refroidissement dirigeant le flux sur la zone correspondante périphériquement limitée du carter. Un accroissement localisé du refroidissement du carter peut également être obtenu par une augmentation relative de la section de passage du distributeur de turbine dans la zone périphérique limitée correspondante. En outre, des dispositifs externes à la turbomachine proprement dite peuvent être envisagés, moyens d'isolation ou distributeurs de gaz de refroidissement ou de réchauffement pour obtenir la répartition périphériquement non uniforme des températures du stator de turbomachine. Les mêmes résultats peuvent être obtenus en prévoyant, au lieu d'un refroidissement accéléré d'une zone périphérique limitée, un réchauffement de la zone complémentaire, grâce à des moyens analogues disposés dans la zone périphérique située du côté de la convexité formée par l'axe du rotor.

D'autres caractéristiques et avantages de l'invention seront mieux compris à la lecture de la description qui va suivre de divers modes de réalisation de l'invention, en référence aux dessins annexés sur lesquels :
- la figure 1 précédemment décrite représente schématiquement un exemple des déformations ou déplacement des axes respectifs de rotor et de stator d'une turbomachine, avant application de la présente invention ;
- La figure 2 représente schématiquement le résultat obtenu sur une turbomachine à laquelle les moyens conformes à l'invention sont appliqués ;
- Les figures 3A et 3B représentent chacune une vue partielle schématique en coupe par un plan passant par l'axe longitudinal de la turbomachine d'un carter de stator de turbomachine conforme à l'invention ;
- La figure 4 représente une vue partielle schématique en coupe par un plan passant par l'axe longitudinal de la turbomachine, analogue à celle de la figure 3, d'un carter de stator de turbomachine associé à des moyens de déformation conformes à l'invention ;
- La figure 5 représente une vue partielle schématique en coupe par un plan passant par l'axe longitudinal de la turbomachine, des parties fixes de stator de turbomachine modifiées conformément à l'invention ;
- La figure 6 représente une vue schématique en coupe par un plan transversal perpendiculaire à l'axe longitudinal de la turbomachine, selon la ligne VI-VI de la figure 5 montrant un distributeur de turbine haute-pression modifié conformément à l'invention ;
- La figure 7 représente une vue schématique en coupe par un plan transversal perpendiculaire à l'axe longitudinal de la turbomachine selon la ligne VII-VII de la figure 5, montrant un anneau de réglage de la répartition périphérique du débit du flux de refroidissement ;
- La figure 8 représente une vue schématique partielle en coupe par un plan passant par l'axe longitudinal de la turbomachine d'une turbomachine associé à des moyens externes de déformation des parties fixes de stator, conformes à l'invention ;
- La figure 9 représente une vue schématique partielle en coupe par un plan passant par l'axe longitudinal de la turbomachine d'une turbomachine associée à des moyens externes de déformation des parties fixes de stator, selon un autre mode de réalisation de l'invention.

La figure 2 représente schématiquement un stator d'une turbomachine dans laquelle le rotor, non représenté sur la figure 2, présente en fonctionnement une déformation correspondant à un affaissement, ou flexion naturelle, ce qui entraîne, de manière analogue au rotor représenté sur la Figure 1, une déformation de son axe géométrique telle qu'il présente une convexité dirigée vers le bas, notamment dans le cas d'un turboréacteur aéronautique. Lorsque la zone périphérique 1 du stator située du côté de la concavité de l'axe du rotor -dans le cas de la figure 2, il s'agit de la zone supérieure - est portée à une température T1 inférieure à la température T2 de la zone périphérique 2 du stator située du côté de la convexité de l'axe du rotor et qui est la zone inférieure dans le cas de la figure 2, on obtient une déformation du stator telle que l'axe longitudinal du stator prend une déformation semblable à celle du rotor et pour une valeur adéquate de ladite déformation, les axes longitudinaux respectifs R et S du rotor et du stator sont confondus.

Il en résulte une égalisation périphérique des jeux radiaux entre rotor et stator de la turbomachine, ce qui évite notamment le contact entre parties tournantes et parties fixes correspondantes qui entraînerait la détérioration des abradables et aubages ainsi que la dégradation subséquente des performances de la machine.

L'invention prévoit divers modes de réalisation des moyens propres à obtenir la répartition périphériquement non uniforme des températures du stator de turbomachine qui entraîne la déformation recherchée du stator s'adaptant à la déformation correspondante du rotor qui a été observée comme cela vient d'être décrit ci-dessus en référence à la figure 2.
Un exemple de tels moyens est représenté sur les figures 3A et 3B. Un carter 3 de stator de turbomachine comporte des éléments 4 en saillie qui forment des obstacles sur le trajet du flux de refroidissement qui circule, de manière connue en soi, le long des parois dudit carter 3. Ces éléments 4 peuvent être disposés, soit sur la surface externe du carter 3, comme représenté sur la figure 3A, soit sur la surface interne du carter 3, comme représenté sur la figure 3B, en fonction de l'aménagement des circuits de refroidissement. De manière remarquable, conforme à l'invention, lesdits obstacles 4 sont disposés uniquement sur une zone périphérique préférentielle du carter 3 qui est située du côté de la concavité formée par l'axe du rotor associé audit stator. Ces obstacles 4 permettent d'augmenter les surfaces d'échanges thermiques entre le carter 3 et le flux de refroidissement. On obtient ainsi un accroissement du refroidissement de cette zone d'où répartition périphériquement non uniforme des températures du stator T1<T2 et une déformation du stator telles que schématisées sur la figure 2. Les flèches f sur la figure 3A et 3B symbolisent l'action du flux de refroidissement.

La figure 4 représente un autre mode de réalisation dans lequel le carter 3 de stator est associé à des distributeurs 5 de gaz de refroidissement amené par des moyens de canalisations 6 connus en soi. Les distributeurs 5 sont disposés sur une zone périphérique limitée du carter 3 correspondant, comme précédemment, à la partie de carter de stator située du côté de la concavité formée par l'axe du rotor et le fonctionnement est identique à celui qui a été décrit en référence aux figures 2 et 3. Un moyen de régulation du débit, d'un type vanne 7, connu en soi, peut avantageusement être adjoint au dispositif.

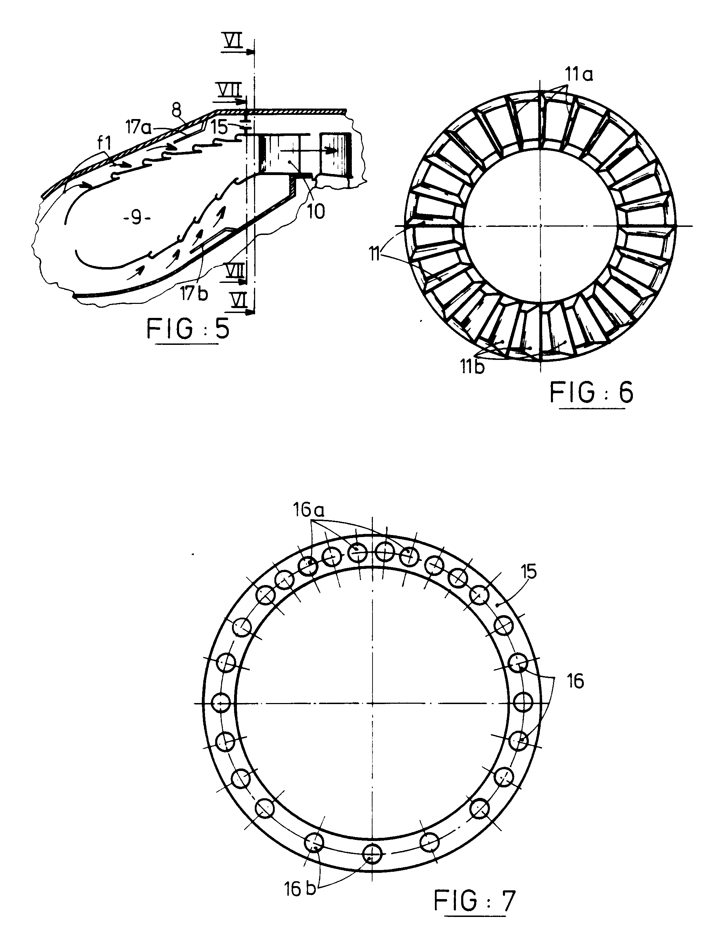

La mise en oeuvre d'une autre solution est schématiquement représentée sur les figures 5 et 6. La partie fixe de turbomachine comporte un carter 8 enveloppant une chambre de combustion 9 à la sortie de laquelle les gaz sont repris par un distributeur 10 qui alimente une turbine à haute-pression. Ledit carter 8, de manière connue en soi, est refroidi par un flux d'air, symbolisé par les flèches f1, qui circule le long de sa paroi interne et alimente notamment ladite chambre 9 en air de dilution. De manière remarquable conforme à l'invention, les secteurs d'aubes fixes 11 dudit distributeur 10 sont montés de manière à obtenir une section de passage plus importante dans une zone périphérique limitée, correspondant comme précédemment au côté de la concavité formée par l'axe du rotor. Le débit plus important obtenu ainsi dans cette zone induit un débit supérieur du flux f1 d'air de refroidissement dans la zone correspondante du carter 8 qui se trouve ainsi plus fortement refroidie, de manière à obtenir les résultats schématisés sur la figure 2. Ces résultats sont notamment obtenus par une sélection desdits secteurs d'aubes fixes 11, les secteurs 11a les plus ouverts étant placés en haut, conformément à l'hypothèse des déformations précédemment notée et les secteurs 11b les plus fermés étant placés en bas. La répartition des secteurs de distributeur de turbine permet aussi d'influencer la répartition des températures de la chambre de combustion et son rayonnement sur le stator. Il en résulte un écart de températures entre les parties correspondantes du stator. La transition entre les secteurs ouverts 11a et les secteurs fermés 11b est déterminée de manière à assurer une répartition judicieuse des températures de chambre de combustion et du flux de refroidissement sur toute la périphérie du carter 8. Les dispositions qui ont été décrites en référence aux figures 5 et 6 dans le cas d'une turbine haute-pression peuvent en fonction des applications particulières être mises en oeuvre à un autre niveau de turbine ou de la turbomachine.
Un autre moyen de réglage du débit du flux f1 d'air de refroidissement, utilisé en variante des dispositions décrites en référence à la figure 6 ou en complément de celles-ci, est représenté sur les figure 5 et 7. Dans la zone de circulation dudit flux f1 d'air de refroidissement, on place un anneau 15 de contrôle du flux. Cet anneau 15 comporte des trous 16 périphériquement répartis qui dosent le passage de l'air de refroidissement et règlent par conséquent le débit du flux f1. De manière remarquable, conforme à l'invention, un débit de passage plus important est obtenu dans une zone périphérique limitée, correspondant comme précédemment au côté de la concavité formée par l'axe du rotor. Dans le cas d'application représenté à titre d'exemple sur les figures, un débit plus important est ainsi prévu en haut où sont placés des trous 16a soit de plus grand diamètre, soit plus nombreux par rapport aux trous 16b placés en bas. Comme précédemment, une transition judicieuse est ménagée entre les trous 16a et 16b sur la périphérie de l'anneau 16.

Selon une disposition complémentaire, des écrans, tels que schématisés en 17a et en 17b, sont placés sur les parois de chambre de combustion afin d'atténuer judicieusement le rayonnement de la chambre de combustion sur les parties correspondantes du stator. Dans le même but que précédemment, la répartition desdits écrans 17a, 17b est également limitée à des zones périphériquement déterminées. Ce moyen contribue à l'obtention de la répartition recherchée des températures.

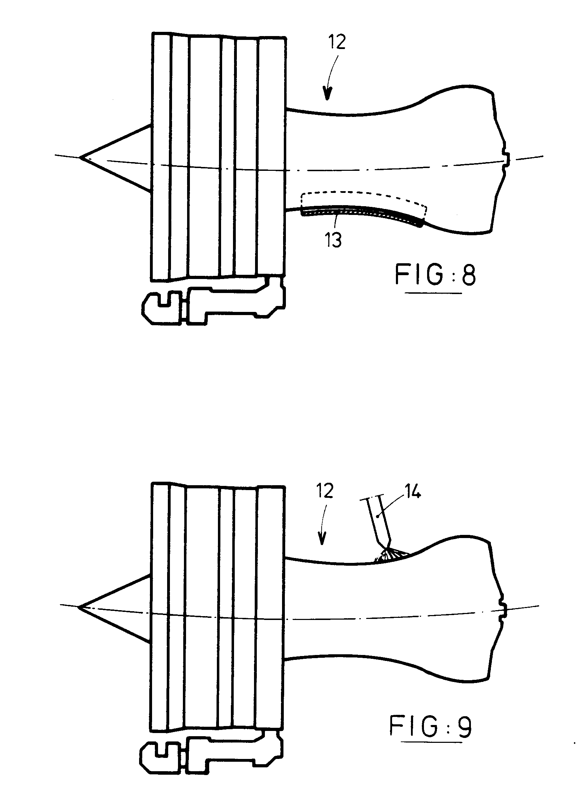

Selon les facilités d'installation sur machine, des moyens externes à la turbomachine peuvent également être envisagés. La figure 8 schématise ainsi une turbomachine 12 à laquelle des moyens externes d'isolation thermique 13 ont été adjoints dans une zone localisée périphérique, située du côté de la convexité de l'axe déformé du rotor de turbomachine. On obtient ainsi un échauffement de la zone périphérique localisée correspondante du stator de turbomachine, ce qui amène un fonctionnement représenté sur la figure 2 et précédemment décrit en référence à cette figure dans les hypothèses retenues où la convexité est tournée vers le bas. En outre, les moyens isolants 13 permettent de retarder le refroidissement des zones protégées, lors de l'arrêt de la machine.

On peut également, comme schématiquement représenté sur la figure 9, adjoindre à la turbomachine 12 des distributeurs externes 14 de gaz de refroidissement qui sont placés dans une zone périphérique localisée correspondant au côté de concavité formée par l'axe déformé du rotor.

On notera, notamment dans les modes de réalisation précédemment décrits en référence aux figures 4 et 9, qu'au lieu d'un gaz de refroidissement, en fonction des niveaux longitudinaux d'installation prévus sur la turbomachine et de diverses facilités de mise en oeuvre liées à l'application particulière, un gaz de réchauffement peut être utilisé.

Dans ce cas, la zone périphérique limitée choisie pour l'emplacement des distributeurs 5 ou 14 sera modifiée de manière à les placer du côté de la convexité formée par l'axe déformé du rotor et de façon à obtenir un échauffement de la zone périphérique correspondante du stator et à retrouver, comme précédemment, la répartition périphériquement non uniforme des températures de stator conduisant au fonctionnement schématisé sur la figure 2.

Les moyens de contrôle de la déformée des stators conformes à l'invention et qui viennent d'être décrits permettent aussi de contrôler les positions géométriques des pièces et organes montés sur les stators tels que tuyères d'éjection ou prises d'air, par exemple.

## Revendications

1. Stator de turbomachine associé à des dispositions pour ajuster en fonctionnement le jeu radial en tout point entre ledit stator et le rotor correspondant de la turbomachine de manière à obtenir notamment un jeu régulier sur toute la périphérie dans un plan transversal à la turbomachine caractérisé en ce que, lorsque l'axe de symétrie (R) du rotor selon la direction longitudinale de la turbomachine correspondant à son axe de rotation subit une déformation, ledit stator est associé à des moyens de déformation (4;5;11;13;14;15) agissant grâce à une répartition périphériquement non uniforme des températures d'au moins une partie du stator (1) de manière à faire coïncider en tout point les axes respectifs longitudinaux du rotor (R) et du stator (S).

2. Stator de turbomachine selon la revendication 1 dans lequel la partie de carter dudit stator située du côté de la concavité formée par l'axe du rotor est associée à un dispositif d'accroissement localisé du refroidissement sur ladite partie.

3. Stator de turbomachine selon la revendication 2 dans lequel ledit dispositif d'accroissement localisé de refroidissement est constitué par des éléments (4) en saillie sur la surface externe de ladite partie de carter, (3), sur une zone périphériquement limitée, formant des obstacles augmentant les surfaces d'échange thermique avec le flux de refroidissement.

4. Stator de turbomachine selon la revendication 2 dans lequel ledit dispositif d'accroissement localisé de refroidissement est constitué par des éléments (4) en saillie sur la surface interne de ladite partie de carter (3), sur une zone périphériquement limitée, formant des obstacles (4) augmentant les surfaces d'échange thermique avec le flux de refroidissement.

5. Stator de turbomachine selon la revendication 2 dans lequel ledit dispositif d'accroissement localisé de refroidissement est constitué par des distributeurs (5) de gaz de refroidissement associés à un moyen de régulation de débit par vanne (7) et qui dirigent un flux déterminé sur la zone correspondante périphériquement limitée du carter (3).

6. Stator de turbomachine selon la revendication 2 dans lequel les secteurs d'aubes fixes (11) de distributeur de turbine sont répartis en fonction de leur section de passage de manière à obtenir un débit plus important dans la zone périphérique limitée correspondant à ladite partie de carter (8) qui se trouve de ce fait soumis à un flux de refroidissement plus important dans ladite zone périphérique limitée et à un effet de rayonnement,dû aux températures de la chambre de combustion, plus faible.

7. Stator de turbomachine selon la revendication 2 dans lequel ledit dispositif d'accroissement localisé de refroidissement est constitué par un anneau (15) placé dans le passage du flux f1 de refroidissement du carter (8) et comportant des trous (16) de passage dudit flux f1, une répartition périphérique irrégulière et/ou un diamètre différent desdits trous (16) permettant d'obtenir un réglage du débit du flux f1 de refroidissement tel qu'un débit plus important de refroidissement est imposé dans ladite zone périphérique limitée du carter (8).

8. Stator de turbomachine selon la revendication 1 dans lequel un effet de répartition non uniforme des températures d'au moins une partie du stator (1) est obtenu grâce à des écrans (17a, 17b) placés sur les parois de la chambre de combustion (9) suivant une répartition limitée à des zones périphériquement déterminées.

9. Stator de turbomachine selon la revendication 1 caractérisé en ce que les moyens de déformation associés sont constitués d'éléments isolants (13) placés à l'extérieur de la turbomachine, dans une zone périphérique limitée, située du côté de la convexité formée par l'axe du rotor de manière à obtenir une diminution du refroidissement ou réchauffement de la partie correspondante du stator thermiquement plus isolée.

10. Stator de turbomachine selon la revendication 1 dans lequel la partie périphériquement limitée de carter dudit stator située du côté de la convexité formée par l'axe du rotor est associée à des moyens de réchauffement localisé de ladite partie de carter.

11. Stator de turbomachine selon la revendication 10 dans lequel lesdits moyens de réchauffement localisés sont constitués par des distributeurs (5) de gaz de réchauffement alimentés par un circuit comportant un moyen de régulation de débit par vanne (7) et qui dirigent un flux déterminé sur la zone correspondante périphériquement limitée du carter (3).

12. Stator de turbomachine selon la revendication 1 caractérisé en ce que les moyens de déformation associés sont constitués de distributeurs (14) de gaz de refroidissement placés à l'extérieur de la turbomachine, dans une zone périphérique limitée, située du côté de la concavité formée par l'axe du rotor de manière à obtenir un refroidissement de la partie correspondante du stator.

13. Stator de turbomachine selon la revendication 1 caractérisé en ce que les moyens de déformation associés sont constitués de distributeurs (14) de gaz de réchauffement placés à l'extérieur de la turbomachine, dans une zone périphérique limitée, située du côté de la convexité formée par l'axe du rotor de manière à obtenir un réchauffement de la partie correspondante du stator.

## Patentansprüche

1. Turbomaschinen-Stator mit Vorrichtungen, die im Betrieb das radiale Spiel zwischen dem Stator und dem zugehörigen Rotor in jedem Punkt so justieren, daß in einer transversalen Ebene der Turbomaschine über die gesamte Peripherie ein regelmäßiges Spiel erzielt wird, **dadurch gekennzeichnet,** daß dann, wenn die Symmetrieachse (R) des Rotors in Längsrichtung der Turbomaschine, die ihrer Drehachse entspricht, einer Verfomung unterliegt, dem Stator Mittel (4; 5; 11; 13; 14; 15) zugeordnet werden, die durch eine über den Umfang wenigstens eines Teils des Stators ungleichförmige Temperaturverteilung (1) in der Weise wirksam sind, daß die jeweiligen Längsachsen (R bzw. S) des Rotors und des Stators in jedem Punkt zusammenfallen.

2. Turbomaschinen-Stator nach Anspruch 1, bei dem demjenigen Gehäuseteil des Stators, der sich auf der konkaven Seite der Rotorachse befindet, eine Vorrichtung zur lokalen Verstärkung der Kühlung auf diesem Gehäuseteil zugeordnet ist.

3. Turbomaschinen-Stator nach Anspruch 2, bei dem die Vorrichtung zur lokalen Verstärkung der Kühlung aus Elementen (4) besteht, die über eine umfangsmäßig begrenzte Zone aus der Außenfläche des genannten Gehäuseteils (3) hervorstehen und Hindernisse bilden, die die Wärmeaustauschflächen mit der Kühlungsströmung vergrößern.

4. Turbomaschinen-Stator nach Anspruch 2, bei dem die Vorrichtung zur lokalen Verstärkung der Kühlung aus Elementen (4) besteht, die über eine umfangsmäßig begrenzte Zone aus der Innenfläche des genannten Gehäuseteils (3) hervorstehen und Hindernisse bilden, die die Wärmeaustauschflächen mit der Kühlungsströmung vergrößern.

5. Turbomaschinen-Stator nach Anspruch 2, bei dem die Vorrichtung zur lokalen Verstärkung der Kühlung aus Verteilern (5) für Kühlungsgas besteht, denen ein Mittel zur Regulierung der Durchflußmenge mittels eines Ventils (7) zugeordnet ist und die eine bestimmte Strömung auf die entsprechende umfangsmäßig begrenzte Zone des Gehäuses (3) lenken.

6. Turbomaschinen-Stator nach Anspruch 2, bei dem die Sektoren der festen Leitschaufeln (11 ) des Verdichters in Abhängigkeit von ihrem Durchgangsquerschnitt so verteilt sind, daß eine größere Durchflußmenge in der umfangsmäßig begrenzten Zone erzielt wird, die dem genannten Gehäuseteil (8) entspricht, der infolge dieses Umstands in der genannten umfangsmäßig begrenzten Zone einer stärkeren Kühlungsströmung und einer schwächeren Strahlungswirkung durch die Temperaturen der Brennkammer ausgesetzt ist.

7. Turbomaschinen-Stator nach Anspruch 2, bei dem die Vorrichtung zur lokalen Verstärkung der Kühlung aus einem Ring (14) besteht, der in dem Durchgang der Kühlungsströmung f1 angeordnet ist und Durchgangsöffnungen (16) für diese Strömung f1 aufweist, wobei eine umfangsmäßig unregelmäßige Verteilung und/oder ein unterschiedlicher Durchmesser der Öffnungen (16) eine Regulierung der Durchflußmenge des Kühlungsströmung f1 in der Weise ermöglichen, daß in der genannten umfangsmäßig begrenzten Zone des Gehäuses eine größere Kühlungs-Durchflußmenge erzwungen wird.

8. Turbomaschinen-Stator nach Anspruch 1, bei dem durch Abschirmungen (17a, 17b), die auf den Wandungen der Brennkammer (9) in einer auf bestimmte Umfangszonen begrenzten Verteilung angeordnet sind, die Wirkung einer ungleichförmigen Temperaturverteilung in zumindest einem Teil des Stators (1) erreicht wird.

9. Turbomaschinen-Stator nach Anspruch 1, dadurch gekennzeichnet, daß die zugeordneten Verformungsmittel aus isolierenden Elementen (13) bestehen, die außerhalb der Turbomaschine in einer umfangsmäßig begrenzten Zone auf der konvexen Seite der Rotorachse so angeordnet sind, daß eine Verringerung der Kühlung oder Erwärmung des entsprechenden Teils des Stators erzielt wird, der stärker wärmeisoliert ist.

10. Turbomaschinen-Stator nach Anspruch 1, bei dem dem umfangsmäßig begrenzten Gehäuseteil des Stators, der sich auf der konvexen Seite der Rotorachse befindet, Mittel zur lokalen Erwärmung dieses Gehäuseteils zugeordnet sind.

11. Turbomaschinen-Stator nach Anspruch 10, bei dem die Mittel zur lokalen Erwärmung aus Verteilern (5) für Erwärmungsgase bestehen, die über einen Kreis gespeist werden, der ein Mittel zur Regulierung der Durchflußmenge mit Hilfe eines Ventils (7) aufweist, wobei die Verteiler eine bestimmte Strömung auf die betreffende umfangsmäßig begrenzte Zone des Gehäuses (3) richten.

12. Turbomaschinen-Stator nach Anspruch 1, dadurch gekennzeichnet, daß die zugeordneten Verformungsmittel aus Verteilern (14) für Kühlungsgas bestehen, die außerhalb der Turbomaschine in einer auf der konkaven Seite der Rotorachse liegenden umfangsmäßig begrenzten Zone so angeordnet sind, daß eine Kühlung des entsprechenden Teils des Stators erreicht wird.

13. Turbomaschinen-Stator nach Anspruch 1, dadurch gekennzeichnet, daß die zugeordneten Verformungsmittel aus Verteilern (14) für Erwärmungsgas bestehen, die außerhalb der Turbomaschine in einer auf der konvexen Seite der Rotorachse liegenden umfangsmäßig begrenzten Zone so angeordnet sind, daß eine Erwärmung des entsprechenden Teils des Stators erreicht wird.

## Claims

1. Turboshaft engine stator associated with arrangements to adjust at any place, while the engine is running, the radial clearance between the said stator and the corresponding rotor of the turboshaft engine in such manner as to obtain notably a uniform clearance around the periphery in a plane transverse in respect of the turboshaft engine characterised in that, when the axis of symmetry (R) of the rotor in the longitudinal direction of the turboshaft engine corresponding to its axis of rotation undergoes a deformation, the said stator is associated with means of deformation (4; 5;11;13;14; 15) acting through a peripherally non-uniform distribution of the temperatures of at least a part of the stator (1) in such a way as to cause the respective longitudinal axes of the rotor (R) and stator (S) to coincide.

2. Turboshaft engine stator in accordance with Claim 1 in which the part of the casing of the said stator situated on the side of the concavity formed by the axis of the rotor is associated with a device for increasing locally the cooling of the said part.

3. Turboshaft engine stator in accordance with Claim 2 in which the said device for increasing locally the cooling is made up of elements (4) projecting from the outer surface of the said part of the casing (3), in a peripherally limited zone, forming obstacles increasing the surface area for heat exchange with the cooling air flow.

4. Turboshaft engine stator in accordance with Claim 2 in which the said device for increasing locally the cooling is made up of elements (4) projecting from the inner surface of the said part of the casing (3), in a peripherally limited zone, forming obstacles increasing the surface area for exchanging heat with the cooling air flow.

5. Turboshaft engine stator in accordance with Claim 2 in which the said device for increasing locally the cooling is constituted by manifolds (5) for cooling gas associated with a means of flow-regulation by valve (7) and which direct a predetermined flow onto the corresponding peripherally limited zone of the casing (3).

6. Turboshaft engine stator in accordance with Claim 2 in which the segments of fixed blades (11) of the turbine manifold are spread out as a function of the cross section of the passage between them in such manner as to obtain a greater output in the peripherally limited zone of the casing corresponding to the said part of the casing (8) which, by virtue of this, is subjected to a cooling flow greater in the said peripherally limited zone and to a radiation effect, due to the temperatures in the combustion chamber, which is lower.

7. Turboshaft engine stator in accordance with Claim 2 in which the said device for increasing locally the cooling is constituted by an annulus (15) placed in the passage for the flow f1 of cooling for the casing (8) and comprising holes (16) to allow the passage of the said flow f1, an unequal peripheral distribution of and/or a different diameter of the said holes (16) allowing an adjustment of the cooling flow f1 to be obtained, such that a greater cooling flow f1 exists in the said peripherally limited zone of the casing (8).

8. Turboshaft engine stator in accordance with Claim 1 in which an effect of non-uniform distribution of temperatures in at least one part of the stator (1) is obtained by baffles (17a, 17b) placed on the walls of the combustion chamber (9) in accordance with a limited distribution in peripherally predetermined zones.

9. Turboshaft engine stator in accordance with Claim 1 characterised in that the associated means of deformation are constituted by insulating elements (13) placed on the outside of the turboshaft engine, in a limited peripheral zone situated on the side of the convexity formed by the axis of the rotor so as to obtain a reduction of the cooling or heating of the corresponding part of the stator which is better thermally insulated.

10. Turboshaft engine stator in accordance with Claim 1 in which the peripherally limited part of the casing of the said stator situated on the side of the convexity formed by the axis of the rotor is associated with a means of heating locally the said part of the casing.

11. Turboshaft engine stator in accordance with Claim 10 in which the said means of localised heating are constituted by heating gas manifolds (5) supplied by a circuit comprising a means of flow regulation by a valve (7) and which direct a predetermined flow to the corresponding peripherally limited zone of the casing (3).

12. Turboshaft engine stator in accordance with Claim 1 characterised in that the associated means of deformation are constituted by cooling gas manifolds (14) placed externally to the turboshaft engine in a limited peripheral zone situated on the side of the concavity formed by the axis of the rotor so as to obtain a cooling of the corresponding part of the stator.

13. Turboshaft engine stator in accordance with Claim 1 characterised in that the associated means of deformation are constituted by heating gas manifolds (14) placed externally to the turboshaft engine in a limited peripheral zone situated on the side of the convexity formed by the axis of the rotor so as to obtain a heating up of the corresponding part of the stator.
